# EUROPÄISCHE PATENTSCHRIFT

(11) **EP 1 726 825 B1**
(45) Veröffentlichungstag und Bekanntmachung des Hinweises auf die Patenterteilung: **23.04.2008**
(21) Anmeldenummer: 05011075.8
(22) Anmeldetag: 23.05.2005
(51) Int. Cl.: F03D 3/04, F03G 6/04

(54) **Vorrichtung zur Energieerzeugung aus einem Luftstrom**
Device for the extraction of energy from an air flow
Dispositif pour la production d'énergie à partir d'un courant d'air

(43) Veröffentlichungstag der Anmeldung: 29.11.2006
(73) Patentinhaber: Uslu, Mehmet, 4050 Traun (AT)
(72) Erfinder: Uslu, Mehmet, 4050 Traun (AT)
(74) Vertreter: Rosenich, Paul

(56) Entgegenhaltungen:
- WO-A-94/27044
- DE-A1- 2 707 343
- DE-C- 600 039
- US-A- 3 436 908
- US-A- 4 367 627

## Beschreibung

Die vorliegende Erfindung gehört zum Bereich Energieerzeugung aus Windenergie, z.B. aus einem Luftstrom, insbesondere in einem Kanal mit hintereinander angeordneten Turbinen.

Windkraftmaschinen sind aus dem Stand der Technik bekannt, z.B. DE19532032A1 beschreibt ein Verfahren zum Erzeugen von Energie durch ein Kraftwerk und/oder aus einem Luftstrom. Die Flügelräder sind dabei über den gesamten Rohrquerschnitt verteilt.

Ein weiteres bekanntes Windkraftwerk ist in DE3924968A1 geoffenbart. Bei dieser Erfindung wird ein Turm bzw. Kamin von unten angeströmt, wobei an der Basis radiale Einlaufkanäle vorgesehen sind.

Eine weitere Fundstelle zum Stand der Technik beschreibt unter TW452630B eine Windkraftmaschine mit einem Kamin. Es wird dabei die Abwärme einer Heizausrüstung genutzt.

Eine weitere Fundstelle zum Stand der Technik ist WO94/27044A2.
Die WO94/27044 A2 beschreibt einen angelegten Schacht entlang eines Bergrückens der mit Panelen abgedeckt ist. Die Zuführung zu diesem Schacht besteht aus einem glasbedeckten Dach auf Bauschutt, um die Temperaturdifferenz zwischen Kamineinlass und -auslass möglichst hoch zu machen. Eine oder mehrere Windturbinen sind am Boden des Schachtes angebracht. Diese werden durch den Luftzug angetrieben.
Als Nachteil wird die flexible Abdeckung mit klappbaren bzw. drehbaren Panelen angesehen, um die schachtförmige Aushöhlung am Bergrücken in einen Windkanal umzuwandeln, da diese vielen Klappen störanfällig sind.

In der WO94/27044A2 wird die Verwendung der natürlichen Temperaturdifferenz zwischen unterschiedlichen Höhen auf der Erde beschrieben, wobei in einem Windkanal Turbinen angetrieben werden, um elektrische Energie zu erzeugen.

Im Gegensatz zur WO94/27044A2 sind bei der erfindungsgemäßen Ausführung die Turbinen im schrägen Windkanal entlang des Bergrückens angeordnet, der Windkanal ist im Wesentlichen geschlossen, und schließt dann an einen senkrechten Kamin an, der die Saugwirkung verstärkt.

Ferner sind verschiedene Windkraftmaschinen bekannt, die über Rotoren betrieben werden und den Luftstrom über Boden im Freien nutzen.

Als Nachteil von DE19532032A1 wird gesehen, dass die Anzahl der hintereinander angeordneten Flügelräder durch den Luftwiderstand begrenzt ist.

Als Nachteil von DE3924968A1 wird angesehen, dass durch die ringförmig angeordneten Luftzuströmungen der Bereich für Turbinen bzw. Generatoren begrenzt ist.

Der vorliegenden Erfindung liegt die Aufgabe zugrunde, eine Vorrichtung zu schaffen, die eine verbesserte, kostengünstige und landschaftsangepasste Nutzung eines Luftstromes ermöglicht, ohne die Nachteile des Standes der Technik zu haben.

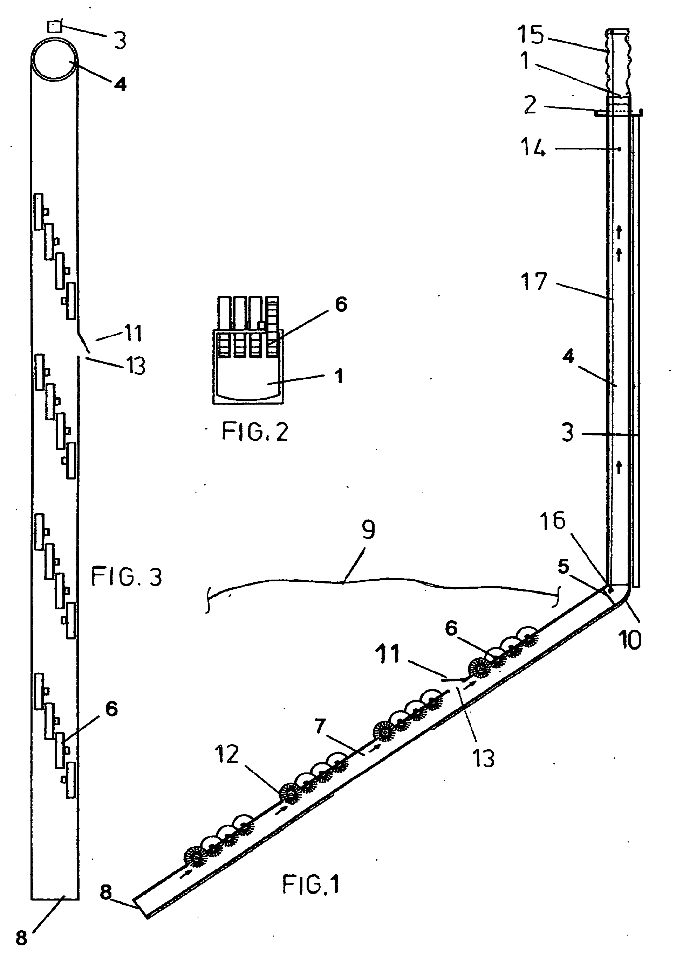

Die Lösung dieser Aufgabe besteht darin, dass in hügeligen, bzw. gebirgigen Landschaften vom Talgrund bis zu einer gewissen Anhöhe eine Rohrleitung aus Kunststoff bzw. vorzugsweise aus Beton verlegt wird, die an einen Kamin anschließt. Er ist vorzugsweise rund, die Höhe ist von der Ortslage abhängig und liegt im Bereich von ca. 200 m oder mehr. Der Kamin ist unten konisch erweitert und schließt in der ganzen Breite bzw. im Durchmesser mittels eines Übergangsteiles 10 an den Lufttunnel 7. Im Übergangsteil 10 befindet sich auch eine Kabine 16 zur Betätigung des Zugseiles 17. Das Zugseil 17 dient zur Betätigung des Schlauchfortsatzes 15. Dieser Fortsatz ist flexibel und wird durch die ausströmende Luft gehalten. Das Zugseil 17 kann innerhalb oder außerhalb des Kamins 4 geführt sein.
In der Bergleitung bzw. im Lufttunnel 7 sind Turbinen 6 in Reihe und seitlich versetzt angeordnet, wobei die Laufräder 12 bis max. zur Mitte des Lufttunnels 7 reichen, siehe Darstellung Fig. 1. Das begünstigt erfindungsgemäß, dass alle Laufräder 12 ausreichend mit der vorbeiströmenden Luft beaufschlagt werden. Zum Anregen der Saugwirkung im Kamin 4 dient eine oder mehrere Luftklappen 11 im Lufttunnel 7.
Die gewerbliche Anwendung liegt im Bereich der Nutzung der Luftströmung von bereits bestehenden oder neu zu errichtenden Tunnel- und Kaminsystemen zur Energieerzeugung mittels Turbinen.

### Bezugszeichenliste:

- 1: Kaminabluft
- 2: Steg zur Wartung und Kontrolle
- 3: Lift oder Steigleiter
- 4: Kamin
- 5: Klappverschluss
- 6: Turbine mit Generator
- 7: Lufttunnel
- 8: Zuluftöffnung
- 9: Berghöhe
- 10: Übergangteil
- 11: Luftklappe
- 12: Laufräder
- 13: Lufteinlass
- 14: Windstrommesseinrichtung
- 15: Schlauchfortsatz mit verstellbarer Öffnung, bedient mit Zugseilen
- 16: Kabine zur Betätigung des Zugseiles 17
- 17: Zugseil

### Funktionsweise:

Luft strömt am Talgrund durch die Zuluftöffnung 8 in den Lufttunnel 7. Auf der Strecke vom Talgrund bis zum Übergangsteil 10 sind seitlich versetzt eine oder mehrere, vorzugsweise bis zu vier Turbinen 6 angeordnet. Das Laufrad reicht dabei erfindungsgemäß max. bis zur Mitte des Tunnels 7. Auf der Strecke von Zuluft bis zum Übergangsteil können mehrere solcher Gruppen an Turbinen bzw. Ventilatoren in Abständen hintereinander angeordnet sein siehe Fig. 1 und Fig. 2. Etwa in einer Entfernung von 90 % der Kaminhöhe ist auf der gegenüberliegenden Seite zur Turbinenseite eine Luftklappe 11 angebracht z.B. wenn der Kamin 200 m hoch ist, dann beträgt die Entfernung vom Übergangsteil 10 zur Luftklappe 11 ca. 180 m. Die durch diese Luftklappe einströmende Luft wird so geregelt, dass sich eine max. Durchströmung bzw. Saugströmung des Lufttunnels 7 ergibt. Der Kamin 4 hat dabei eine starke Saugwirkung. Erfindungsgemäß verstärkt die Luftklappe 11 die Saugwirkung solange, bis ein Maximum erreicht ist, dann wird diese Klappe wieder geschlossen.

### Beschreibung der Figuren:

Fig. 1 zeigt den Luftbeschleunigungstunnel 7 mit einer Zuluftöffnung 8, Turbine mit Generatoren 6, den Klappverschluss 5, das Übergangsteil 10 und die Luftklappe 11. Die Luftklappe 11 kann automatisch mit einer Regelung verbunden sein, die z.B. im Kamin die Windgeschwindigkeit misst und damit den Gesamtluftstrom optimiert. Weiters zeit Fig. 1 eine Berghöhenlinie 9. Das Übergangsteil 10 kann in etwa auf der Berghöhenlinie 9 oder darunter liegen. Weiters zeigt Fig. 1 den Kamin 4 und eine Steigleiter 3, einen Steg zur Wartung 3 und Kontrolle sowie die Kaminabluft 1.
Durch einen optionalen Aufsatz 15 kann die Kaminhöhe bei Bedarf vergrößert werden. Dieser Aufsatz ist schlauchförmig und hat einen ringförmigen Verschluss, ähnlich dem von Säcken mit einem rundumlaufenden Band. Dieses Band ist mit Zugseilen an der Oberseite des Kamins befestigt, und wird durch Zugseile bedient.

Fig. 2 zeigt einen Querschnitt durch den Lufttunnel 7 mit vorzugsweise etwa vier erfindungsgemäß angeordneten Turbinen 6. Im Tunnel können mehrere solcher Turbinengruppen nacheinander angeordnet sein.

Fig. 3 zeigt eine Aufsicht auf die Strecke von Zuluft 8 bis zum Übergangsteil 10 mit den seitlich versetzten Turbinen 6, die in Gruppen nacheinander im Lufttunnel 7 angeordnet sind. Die Luft strömt durch die Zuluftöffnung 8 ein. Ein weiterer Lufteinlass 13 kann mittels der Luftklappe 11 hergestellt werden. Dieser Lufteinlass 13 dient zum "Starten" der Saugströmung. Die Luftklappe wird geschlossen, nachdem mittels einer Windstrommesseinrichtung 14 der optimale Luftstrom festgestellt wurde. Weiters zeigt Fig. 3 den kreisförmigen Kamin 4 mit dem Lift 3 oder Steigleiter 3.

## Patentansprüche

1. Vorrichtung mit einem Lufttunnel (7) zur Energieerzeugung aus einem Luftstrom im Lufttunnel (7), mit einer Zuluftöffnung (8) und einem Lufttunnel-Ende, das an einen Kamin (4) anschließt, wobei zwischen dem Lufttunnel (7) und dem Kamin (4) ein Übergangsteil (10) angeordnet ist, mit einer Mehrzahl von im Lufttunnel (7) hintereinander angeordneten Turbinen (6) mit Laufrädern (12) und mit einem zusätzlichen Lufteinlass (13) in den Lufttunnel (7), **dadurch gekennzeichnet, dass** auf der Strecke zwischen Zuluftöffnung (8) und Übergangsteil (10) eine Mehrzahl von Turbinen (6) seitlich versetzt in einer Gruppe angeordnet ist, wobei eine oder mehrere solcher Gruppen nacheinander im Lufttunnel (7) angeordnet ist bzw. sind.

2. Vorrichtung nach Anspruch 1 **dadurch gekennzeichnet, dass** der Abstand des Lufteinlasses (13) vom Übergangsteil (10) in einem Verhältnis zur Länge des Kamins (4) steht und dieses Verhältnis bevorzugt ca. 90 % der Kaminhöhe beträgt.

3. Vorrichtung nach Anspruch 1 und 2 **dadurch gekennzeichnet, dass** der Übergangsteil (10) auf oder unterhalb der Berghöhe (9) liegt.

4. Vorrichtung nach den vorhergehenden Ansprüchen **dadurch gekennzeichnet, dass** am oberen Kaminende (1) eine schlauchförmige Fortsetzung (15) mit verstellbarer, mit Zugseilen (17) bedienbarer Öffnung vorgesehen ist.

5. Vorrichtung nach den vorhergehenden Ansprüchen **dadurch gekennzeichnet, dass** der Kamin (4) nach oben konisch verjüngt ist, vorzugsweise rund im Querschnitt ist und dass seine Höhe im Bereich von ca. 200 m oder mehr liegt.

6. Vorrichtung nach den vorhergehenden Ansprüchen **dadurch gekennzeichnet, dass** eine Kabine (16) vorgesehen ist zur Betätigung der Zugseile (17).

7. Vorrichtung nach den vorhergehenden Ansprüchen **dadurch gekennzeichnet, dass** eine oder mehrere Luftklappen (11) mit einem Lufteinlass (13) im Lufttunnel (7) vorgesehen sind.

8. Vorrichtung nach Anspruch 1 **dadurch gekennzeichnet, dass** die Laufräder (12) der Turbinen (6) bis maximal zur Mitte des Lufttunnels (7) reichen.

9. Verfahren zur Anregung eines Luftstromes in einem Lufttunnel (7) mit der Vorrichtung der vorhergehenden Ansprüche, **dadurch gekennzeichnet, dass** eine oder mehrere Luftklappen (11) einen Lufteinlass (13) im Lufttunnel (7) bewirkt, wobei die dadurch erhöhte Saug-Wirkung im Kamin (4) mit einem Windstrommesser (14) kontrolliert wird, und dass die Luftklappen (11) wieder geschlossen werden.

## Claims

1. A device comprising an air tunnel (7) for generating energy from an air flow in said air tunnel (7), comprising an incoming air opening (8) and an air tunnel end which adjoins a chimney (4), wherein a transition portion (10) is located between the air tunnel (7) and the chimney (4), comprising a plurality of turbines (6) with impellers (12) arranged one behind the other in the air tunnel (7) and comprising an additional air inlet (13) in the air tunnel (7), **characterised in that** a plurality of turbines (6) laterally offset in a group is arranged on the section between the incoming air opening (8) and the transition portion (10), wherein one or more such groups is or are arranged one after the other in the air tunnel (7).

2. The device according to claim 1, **characterised in that** the distance between the air inlet (13) and the transition portion (10) is in a ratio to the length of the chimney (4) and this ratio is preferably 90% of the chimney height.

3. The device according to claim 1 and 2, **characterised in that** the transition portion (10) lies at or below the mountain height (9).

4. The device according to the preceding claims, **characterised in that** a tubular extension (15) with an adjustable opening which can be controlled with cables (17) is provided at the upper chimney end (1).

5. The device according to the preceding claims, **characterised in that** the chimney (4) is conically tapered upwards, preferably has a circular cross-section and its height lies in the range of about 200 m or more.

6. The device according to the preceding claims, **characterised in that** a cab (16) is provided for actuating the cables (17).

7. The device according to the preceding claims, **characterised in that** one or more air flaps (11) with an air inlet (13) in the air tunnel (7) are provided.

8. The device according to claim 1, **characterised in that** the impellers (12) of the turbines (6) extend as far as the middle of the air tunnel (7) at most.

9. A method for stimulating an air flow in an air tunnel (7) with the device according to the preceding claims, **characterised in that** one or more air flaps (11) effect an air inlet (13) in the air tunnel (7), wherein the suction effect thereby increased in the chimney (4) is monitored by means of a wind flow meter (14) and that the air flaps (11) are closed again.

## Revendications

1. Dispositif avec un tunnel d'air (7) pour la production d'énergie à partir d'un courant d'air dans le tunnel d'air (7), comprenant une ouverture d'air amené (8) et un bout du tunnel d'air, auquel une cheminée (4) s'attache, une section de transition (10) étant disposée entre le tunnel d'air (7) et la cheminée (4), et comprenant une pluralité des turbines (6) ayant des roues mobiles (12) et étant disposées en série dans le tunnel d'air (7), et une entrée d'air additionnelle (13) dans le tunnel d'air (7), **caractérisé en ce, qu**'une pluralité de turbines (6) sont disposées latéralement décalées dans une groupe au parcours entre l'ouverture d'air amené (8) et la section de transition (10), une ou plusieurs de ces groupes étant disposée(s) en série dans le tunnel d'air (7).

2. Dispositif selon la revendication 1, **caractérisé en ce, que** la distance de l'entrée d'air (13) à la section de transition (10) a un rapport à la longueur de la cheminée (4), et ce rapport monte préférablement à environ 90% de l'hauteur de la cheminée.

3. Dispositif selon les revendications 1 et 2, **caractérisé en ce, que** la section de transition (10) est à l'hauteur de croupe de montagne (9) ou au dessous de celle-ci.

4. Dispositif selon une quelconque des revendications précédentes, **caractérisé en ce, qu**'une prolongation en forme de tuyau flexible (15), comprenant une ouverture ajustable, qui peut être actionnée par des câbles de traction (17), est prévue au bout supérieur de la cheminée (1).

5. Dispositif selon une quelconque des revendications précédentes, **caractérisé en ce, que** la cheminée (4) est réduite en forme de cône vers le haut, est préférablement arrondie en coupe transversale, et que son hauteur est dans le <domaine d'environ 200m ou plus.

6. Dispositif selon une quelconque des revendications précédentes, **caractérisé en ce, qu**'une cabine (16) est prévue pour actionner les câbles de traction (17).

7. Dispositif selon une quelconque des revendications précédentes, **caractérisé en ce, qu**'une ou plusieurs volet(s) d'air (11) avec un entrée d'air (13) est/sont prévu(s) dans le tunnel d'air (7).

8. Dispositif selon la revendication 1, **caractérisé en ce, que** les roues mobiles (12) des turbines (6) s'étendent en maximum jusqu'au milieu du tunnel d'air (7).

9. Procédé pour mettre en marche un courant d'air dans un tunnel d'air (7) au moyen d'un dispositif selon une quelconque des revendications précédentes, **caractérisé en ce, qu**'un volet d'air (11) effectue une entrée d'air (13) dans le tunnel d'air (7), l'effet augmenté d'aspiration dans la cheminée étant contrôlé par un dispositif mesureur du courant de vent (14), et que le volet d'air (11) est fermé de nouveau.
